# EUROPÄISCHE PATENTANMELDUNG

(11) **EP 4 512 697 A1**
(43) Veröffentlichungstag der Anmeldung: **26.02.2025**
(21) Anmeldenummer: 24195971.7
(22) Anmeldetag: 22.08.2024
(51) Int. Cl.: B62D 15/02, B62D 5/04

(54) **LENKSYSTEM SOWIE FAHRZEUG**

(30) Priorität: 25.08.2023 DE 102023208166
(71) Anmelder: VOLKSWAGEN AG, 38440 Wolfsburg (DE)
(72) Erfinder: Leibel, Wassili, 29640 Schneverdingen (DE); Kriegel, Kai Mario, 38122 Braunschweig (DE); Velser, Marco, 31224 Peine (DE)

(57) **Zusammenfassung**

Die Erfindung betrifft ein Lenksystem (2) für eine Lenkung eines Fahrzeuges (1), aufweisend eine Lenkeinheit (10) zum Beeinflussen einer Lenkrichtung des Fahrzeuges (1), eine Antriebseinheit (11) zum Antreiben der Lenkeinheit (10) mit einem Rotationselement (12) zum Ausführen einer Rotationsbewegung (200) zum Beeinflussen der Lenkrichtung, eine Elektronikeinheit (20), die zum Erfassen eines ersten Rotationsparameters (201) der Rotationsbewegung (200) mit Energie versorgt wird, und in einen deaktivierten Zustand, in welchem die Energieversorgung der Elektronikeinheit (20) unterbrochen ist, bringbar ist, und eine Kontrolleinheit (30) zum Erkennen einer Lenkposition der Lenkeinheit (10) in Abhängigkeit von dem ersten Rotationsparameter (201). Ferner betrifft die Erfindung ein Fahrzeug (1).

## Beschreibung

Die Erfindung betrifft ein Lenksystem für eine Lenkung eines Fahrzeuges, sowie ein Fahrzeug.

Es ist aus dem Stand der Technik bekannt, in Lenksystemen einen Lenkwinkel zu messen, um die aktuelle Radstellung für Steuerungsaufgaben im Fahrzeug zu erfassen. Insbesondere ist bei einer Steer-by-Wire-Lenkung häufig eine absolute Positionsmessung zur Bestimmung der Zahnstangenposition vorteilhaft. Die Positionsbestimmung sollte dabei i. d. R. deutlich präziser sein als bei herkömmlichen Lenksystemen mit mechanischer Kopplung zum Lenkrad. Durch den Entfall der mechanischen Kopplung bei einer Steer-by-Wire-Lenkung kann ferner häufig nicht mehr auf andere Sensoren im Fahrzeug, z. B. am Lenkrad, zurückgegriffen werden. Dies stellt besondere Anforderungen an die Genauigkeit und Sicherheit der Sensorik und stellt somit auch einen Kostenfaktor dar.

Für die absolute Positionsmessung werden häufig Sensoren eingesetzt, die einen Umdrehungswinkel innerhalb einer Umdrehung einer drehbaren Komponente des jeweiligen Lenksystems erkennen können. Zusätzlich wird dann die Umdrehungszahl, z. B. durch eine softwaregestützte Zählung, erfasst. Eine Möglichkeit einer Positionsmessung an einem Stellmotor eines Lenksystems ist beispielsweise aus dem Dokument WO 2020/182522 A1 bekannt. Des Weiteren ist ein Rotorlagesensor aus der WO 2015/067530 A1 bekannt.

Nachteilhaft an bekannten Lösungen ist es häufig, dass herkömmliche Sensoren eine Bestromung erfordern, um die Positionsmessung durchzuführen. Dies hat jedoch zur Folge, dass eine Änderung der Lenkposition im unbestromten Zustand nicht erkannt werden kann bzw. die Zuordnung zu einer Umdrehungszahl nicht erfolgen kann, wodurch die absolute Position verloren geht. Wenn sich das Fahrzeug beispielsweise in einer Werkstatt befindet, kann vorgesehen sein, dass das Lenksystem vollständig von allen Spannungsquellen getrennt wird. In diesem Fall wird die Umdrehungszahl nicht mitgeschrieben, sodass bei einem anschließenden Neustart des Fahrzeuges die absolute Lenkposition unbekannt ist.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Sicherheit und/oder Zuverlässigkeit eines Lenksystems, vorzugsweise auch in Sondersituationen, zu verbessern.

Die voranstehende Aufgabe wird gelöst durch ein Lenksystem mit den Merkmalen des Anspruchs 1 sowie ein Fahrzeug mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Lenksystem beschrieben sind, selbstverständlich auch im Zusammenhang mit dem erfindungsgemäßen Fahrzeug und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung ist ein Lenksystem für eine Lenkung eines Fahrzeuges vorgesehen. Das Lenksystem umfasst eine Lenkeinheit zum Beeinflussen einer Lenkrichtung des Fahrzeuges, d. h., insbesondere einer Fahrtrichtung des Fahrzeuges, und eine Antriebseinheit zum Antreiben der Lenkeinheit. Die Antriebseinheit weist ein Rotationselement zum Ausführen einer Rotationsbewegung zum Beeinflussen der Lenkrichtung auf. Weiterhin umfasst das Lenksystem eine Elektronikeinheit, die in einen aktiven Zustand, in welchem die Elektronikeinheit zum Erfassen eines ersten Rotationsparameters zum Erkennen einer Umdrehungszahl des Rotationselementes mit Energie versorgt wird, und in einen deaktivierten Zustand, in welchem die Energieversorgung der Elektronikeinheit unterbrochen ist, bringbar ist. Ferner umfasst das Lenksystem eine Kontrolleinheit zum Erkennen einer Lenkposition der Lenkeinheit in Abhängigkeit von dem ersten Rotationsparameter. Die Elektronikeinheit weist eine erste Erfassungseinheit mit einem Erfassungsmittel auf. Das Erfassungsmittel ist im deaktivierten Zustand der Elektronikeinheit, und vorzugsweise auch im aktiven Zustand, durch eine elektromagnetische Wechselwirkung mit dem Rotationselement in Abhängigkeit von dem ersten Rotationsparameter der Rotationsbewegung des Rotationselementes elektromagnetisch veränderbar, sodass der erste Rotationsparameter für das Erkennen der Lenkposition im aktiven Zustand der Elektronikeinheit anhand der elektromagnetischen Veränderung des Erfassungsmittels erfassbar ist.

Bei dem Fahrzeug kann es sich vorzugsweise um ein Kraftfahrzeug, z. B. in Form eines Elektrofahrzeuges, handeln. Bei dem Lenksystem kann es sich vorzugsweise um ein Steer-by-Wire-Lenksystem handeln. Zum Beeinflussen der Lenkrichtung kann eine Zahnstange der Lenkeinheit bewegbar sein.

Die Antriebseinheit kann einen Elektromotor zum Antreiben der Lenkeinheit zum Ausführen einer Lenkbewegung umfassen, um die Lenkrichtung zu beeinflussen. Ferner kann die Antriebseinheit in die Lenkeinheit integriert sein. Die Lenkeinheit und/oder die Antriebseinheit kann in Abhängigkeit von einer Bewegung eines Lenkmittels, wie z. B. eines Lenkrades, ansteuerbar sein. Es kann vorgesehen sein, dass die Kontrolleinheit zum Ansteuern der Lenkeinheit und/oder der Antriebseinheit ausgebildet ist. Bei dem Rotationselement kann es sich beispielsweise um eine Abtriebswelle des Elektromotors handeln. Vorteilhafterweise kann das Rotationselement zum Antrieb eines Riementriebes durch die Rotationsbewegung ausgebildet sein, vorzugsweise über welchen die Zahnstange bewegbar ist.

Die Elektronikeinheit kann elektronische Bauelemente zum Erfassen des ersten Rotationsparameters und/oder weitere Sensorik des Lenksystems umfassen. Die Elektronikeinheit kann ferner vorteilhafterweise in ein Steuergerät des Lenksystems integriert sein. Im deaktivierten Zustand kann die Elektronikeinheit spannungslos sein. Vorzugsweise ist die Elektronikeinheit an einem Wellenende des Rotationselementes angeordnet.

Die Kontrolleinheit kann dazu ausgebildet sein, die Lenkposition anhand des ersten Rotationsparameters zu berechnen. Die Kontrolleinheit kann einen Prozessor und/oder einen Mikroprozessor umfassen. Somit kann die Kontrolleinheit insbesondere auch als Recheneinheit bezeichnet werden. Ferner kann die Kontrolleinheit zumindest teilweise oder vollständig in ein zentrales Steuergerät des Fahrzeuges integriert sein. Es ist jedoch ebenfalls denkbar, dass die Kontrolleinheit zumindest teilweise oder vollständig in ein oder mehrere dezentrale Steuergeräte integriert ist. Vorzugsweise ist die Kontrolleinheit in die Elektronikeinheit integriert. Insbesondere können die Kontrolleinheit und die Elektronikeinheit Teil einer ECU für das Lenksystem sein. Insbesondere kann die Kontrolleinheit im deaktivierten Zustand der Elektronikeinheit ebenfalls deaktiviert, d. h., insbesondere spannungslos, und/oder das Erkennen der Lenkposition verhindert sein.

Der erste Rotationsparameter kann beispielsweise eine Anzahl ausgeführter Umdrehungen und/oder Umdrehungsabschnitte des Rotationselementes, insbesondere in eine Richtung und/oder ausgehend von einer Referenz, umfassen und/oder rechnerisch bestimmbar machen. Unter den Umdrehungsabschnitten kann eine Anzahl endlicher Winkelsegmente verstanden werden, in welche die Umdrehung des Rotationselementes unterteilbar ist. Beispielsweise kann der Rotationsparameter eine Anzahl von Umdrehungsabschnitten in Form von ganzen und/oder halber Umdrehungen und/oder von Viertelumdrehungen umfassen. Anhand der Umdrehungsabschnitte kann die Umdrehungszahl, z. B. durch die Kontrolleinheit, berechenbar sein.

Für die elektromagnetische Wechselwirkung des Erfassungsmittels mit dem Rotationselement kann das Rotationselement magnetisiert sein und/oder einen Magneten, insbesondere in Form eines Dauermagneten, umfassen. Die magnetische Veränderung des Erfassungsmittels kann beispielsweise eine Polarisation und/oder Magnetisierung, insbesondere von Teilabschnitten, eines Materials des Erfassungsmittels in Abhängigkeit umfassen. Dazu kann das Erfassungsmittel ein magnetisierbares und/oder magnetisch polarisierbares Material, vorzugsweise in Form einer Spule, umfassen. Ferner kann das Erfassungsmittel elektrisch leitfähig sein, sodass die magnetische Veränderung in Abhängigkeit von einem Stromparameter, z. B. einem elektrischen Widerstand des Erfassungsmittels, messbar ist. Vorzugsweise kann die elektromagnetische Veränderung auf einem GMR-Effekt beruhen. Das Erfassungsmittel kann dabei vorteilhafterweise einen GMR-Sensor, insbesondere in Form eines GMR-Multiturnsensors, umfassen.

Somit ist es im Rahmen der Erfindung erkannt worden, dass die elektromagnetische Veränderbarkeit des Erfassungsmittels eine Erfassung des ersten Rotationsparameters und damit insbesondere der Umdrehungszahl auch dann ermöglicht, wenn die Elektronikeinheit und die Kontrolleinheit nicht bestromt werden. Die magnetische Veränderung bildet dabei insbesondere eine Speicherfunktion, durch welche der erste Rotationsparameter abgerufen werden kann, wenn sich die Elektronikeinheit wieder im aktiven Zustand befindet. Im aktiven Zustand kann durch die Elektronikeinheit beispielsweise eine elektrische Messung durchgeführt werden, um den Zustand des Erfassungsmittels zu messen und dadurch die elektromagnetische Veränderung zu erfassen. Dadurch kann eine zuverlässige Positionsmessung des Rotationselementes und damit der Lenkeinheit erfolgen.

Im Rahmen der Erfindung ist es weiterhin denkbar, dass die erste Erfassungseinheit zumindest ein Sensorelement zur Erfassung eines zweiten Rotationsparameters der Rotationsbewegung im aktiven und/oder deaktivierten Zustand der Elektronikeinheit aufweist, wobei die Kontrolleinheit dazu ausgebildet ist, die Lenkposition anhand einer Kombination des ersten und zweiten Rotationsparameters zu ermitteln. Der zweite Rotationsparameter kann vorzugsweise ein Winkelmaß eines Rotationswinkels des Rotationselementes innerhalb einer Umdrehung und/oder eines Umdrehungsabschnittes umfassen. Beispielsweise kann das Sensorelement dazu ausgebildet sein, einen Drehwinkel innerhalb einer Rotation des Rotationselementes um 360° und/oder um 180° zu messen. Dazu kann das Sensorelement beispielsweise als magnetoresistiver Sensor, vorzugsweise als AMR-Sensor, TMR-Sensor und/oder Hall-Sensor, ausgebildet sein. Die Kombination des ersten und zweiten Rotationsparameters kann zumindest eine Rechenoperation umfassen. Beispielsweise können der erste und zweite Rotationsparameter anhand einer mathematischen Funktion in die Lenkposition überführt werden. Somit kann durch das Sensorelement die Genauigkeit bei der Bestimmung der Lenkposition verbessert werden.

Es ist ferner bei einem erfindungsgemäßen Lenksystem denkbar, dass die Elektronikeinheit dazu ausgebildet ist, die elektromagnetische Veränderung des Erfassungsmittels, vorzugsweise anhand einer Widerstandsmessung des Erfassungsmittels, zu messen. Durch die Widerstandsmessung kann insbesondere ein Polarisationszustand des Erfassungsmittels erkennbar sein. Für die Widerstandsmessung kann das Erfassungsmittel im aktiven Zustand der Elektronikeinheit über einen elektrischen Anschluss und/oder durch Induktion bestrombar sein. Dazu kann das Erfassungsmittel elektrisch leitend mit einem Energieversorgungssystem und/oder einem Messelement der Elektronikeinheit verbindbar sein. Dadurch kann die elektromagnetische Veränderung des Erfassungsmittels mit einer hohen Genauigkeit vorteilhaft mess- und verarbeitbar sein.

Ferner kann bei einem erfindungsgemäßen Lenksystem vorteilhafterweise vorgesehen sein, dass die Elektronikeinheit eine zweite Erfassungseinheit mit einem Erfassungsmittel, das im deaktivierten Zustand der Elektronikeinheit durch eine elektromagnetische Wechselwirkung mit dem Rotationselement in Abhängigkeit von dem ersten Rotationsparameter elektromagnetisch veränderbar ist, und/oder einem Sensorelement zur Erfassung des zweiten Rotationsparameters aufweist, wobei die zweite Erfassungseinheit redundant zur ersten Erfassungseinheit ausgebildet ist. Die zweite Erfassungseinheit kann baugleich zu der ersten Erfassungseinheit ausgeführt sein. Vorzugsweise können die Erfassungsmittel und/oder Sensorelemente der ersten und zweiten Erfassungseinheit jeweils baugleich ausgeführt sein. Insbesondere können die erste und zweite Erfassungseinheit für die Redundanz jeweils eine eigene Energieversorgung und/oder Kommunikationsanbindung an die Kontrolleinheit aufweisen. Durch die zweite Erfassungseinheit kann somit eine Ausfallsicherheit bei der Erkennung der Lenkposition erhöht werden.

Weiterhin kann bei einem erfindungsgemäßen Lenksystem vorteilhafterweise vorgesehen sein, dass die Elektronikeinheit ein Energieversorgungssystem mit zumindest einem ersten Energieversorgungsnetz zum Versorgen der ersten Erfassungseinheit, insbesondere mit elektrischer Energie, und einem zweiten Energieversorgungsnetz zum Versorgen der zweiten Erfassungseinheit, insbesondere mit elektrischer Energie, aufweist, wobei das erste und zweite Energieversorgungsnetz, insbesondere für eine unabhängige Energieversorgung voneinander, mit jeweils einer Energiequelle des Fahrzeuges verbindbar oder verbunden sind. Die Energiequellen für das erste und zweite Energieversorgungsnetz können sich voneinander unterscheiden. Beispielsweise ist es denkbar, dass das erste Energieversorgungsnetz an eine Fahrzeugbatterie, insbesondere in Form einer Traktionsbatterie, des Fahrzeuges und/oder das zweite Energieversorgungsnetz an einen Zwischenspeicher für eine Notstromversorgung anschließbar ist. Ferner können das erste und zweite Energieversorgungsnetz an unterschiedliche Bordnetze, insbesondere in Form von Niedervoltnetzen, des Fahrzeuges angeschlossen sein. Somit kann durch die Energieversorgungsnetze eine Ausfallsicherheit der ersten und zweiten Erfassungseinheit höht sein.

Weiterhin kann bei einem erfindungsgemäßen Lenksystem vorteilhafterweise vorgesehen sein, dass die erste und zweite Erfassungseinheit in Bezug auf eine Drehachse des Rotationselementes symmetrisch zueinander angeordnet sind. Bei der Drehachse kann es sich insbesondere um eine geometrische Achse des Rotationselementes handeln, um welche das Rotationselement zum Antrieb der Lenkeinheit drehbar ist. Bei der symmetrischen Anordnung können das erste und zweite Erfassungsmittel jeweils den gleichen Abstand zur Drehachse aufweisen. Ferner können das erste und zweite Sensorelement jeweils den gleichen Abstand zur Drehachse aufweisen. Dabei können die erste und zweite Erfassungseinheit an der Drehachse elektrisch und/oder magnetisch voneinander isoliert sein. Dadurch kann eine gegenseitige Beeinflussung reduziert und/oder die Redundanz verbessert sein.

Weiterhin kann bei einem erfindungsgemäßen Lenksystem vorteilhafterweise vorgesehen sein, dass die Elektronikeinheit eine Leiterplatte mit einer ersten Seite, die dem Rotationselement zugewandt ist, und einer zweiten Seite, die dem Rotationselement abgewandt ist, aufweist, insbesondere wobei die erste Erfassungseinheit und/oder die zweite Erfassungseinheit auf der zweiten Seite der Leiterplatte angeordnet ist. Es ist jedoch ebenso denkbar, dass die erste und zweite Erfassungseinheit auf der ersten oder zweiten Seite der Leiterplatte angeordnet sind. Bei der Leiterplatte kann es sich insbesondere um eine Platine mit mehreren elektronischen Bauelementen handeln. Die Leiterplatte kann senkrecht zur Drehachse orientiert sein, sodass die erste Seite der Leiterplatte einer Stirnseite des Rotationselements zugewandt ist. Vorzugsweise kann der Magnet des Rotationselements an der Stirnseite angeordnet sein oder die Stirnseite bilden. Dadurch kann die magnetische Veränderung des Erfassungsmittels in Bezug auf die Rotation des Rotationselementes definiert sein. Durch eine in Bezug auf die Leiterplatte auf gegenüberliegenden Seiten vorgesehen Anordnung der beiden Erfassungseinheiten können die beiden Erfassungseinheiten einen unterschiedlichen Abstand zum Rotationselement aufweisen. Dadurch kann die Wechselwirkung der Erfassungsmittel der ersten und zweiten Erfassungseinheit mit dem Rotationselement unterschiedlich stark ausgeprägt sein, sodass ein Fehler anhand von Abweichungen einfacher erkennbar ist. Ferner kann sich ein Fehler auf einer Seite der Leiterplatte entsprechend nur auf eine der beiden Erfassungseinheiten auswirken. Durch eine Anordnung der ersten und zweiten Erfassungseinheit auf der ersten Seite der Leiterplatte können beide Erfassungseinheiten den gleichen Abstand zum Rotationselement aufweisen, insbesondere sodass ein Ausfall einer der beiden Erfassungseinheiten keinen oder nahezu keinen Einfluss auf die Genauigkeit der Erkennung der Lenkposition hat.

Im Rahmen der Erfindung ist es weiterhin denkbar, dass die erste und zweite Erfassungseinheit eine gemeinsame Baueinheit bilden oder auf mehrere Baueinheiten zur Anordnung auf der Leiterplatte aufgeteilt sind. Wenn die erste und zweite Erfassungseinheit eine gemeinsame Baueinheit bilden, kann vorgesehen sein, dass die erste und zweite Erfassungseinheit in einem gemeinsamen Gehäuse angeordnet und/oder durch einen geteilten elektronischen Baustein, insbesondere in Form eines Chips, gebildet sind. Dabei kann jede Erfassungseinheit vorzugsweise einen Halbleiter-Die umfassen, welcher das Erfassungsmittel und das Sensorelement der jeweiligen Erfassungseinheit aufweist. Zur Redundanz können die beiden Halbleiter-Dies jeweils an ein unterschiedliches Energieversorgungsnetz angeschlossen sein. Somit kann durch die Ausbildung der ersten und zweiten Erfassungseinheit als gemeinsame Baueinheit eine einfache Fertigung und/oder Montage der Elektronikeinheit ermöglicht sein. Durch eine Ausbildung mit mehreren separaten Baueinheiten können die erste und zweite Erfassungseinheit und/oder die Erfassungsmittel und Sensoreinheiten unabhängig voneinander gehandhabt werden und/oder positioniert sein. Insbesondere können die erste und zweite Erfassungseinheit und/oder die Erfassungsmittel und Sensoreinheiten dabei jeweils ein eigenes Gehäuse umfassen und/oder durch einen separaten elektronischen Baustein, insbesondere in Form eines Chips und/oder Halbleiter-Dies, gebildet sein.

Ferner kann bei einem erfindungsgemäßen Lenksystem vorteilhafterweise vorgesehen sein, dass eine Zusatzerfassungseinheit vorgesehen ist, die zwei Sensorelemente umfasst, vorzugsweise die zu der ersten und zweiten Erfassungseinheit im Energieversorgungssystem eine Kreuzverschaltung aufweisen. Die Sensorelemente der Zusatzerfassungseinheit können baugleich oder unterschiedlich zu dem Sensorelement der ersten und/oder zweiten Erfassungseinheit ausgebildet sein. Vorzugsweise können die Sensorelemente der Zusatzerfassungseinheit beispielsweise als magnetoresistiver Sensor, vorzugsweise als AMR-Sensor, TMR-Sensor und/oder Hall-Sensor, ausgebildet sein. Unter der Kreuzverschaltung kann verstanden werden, dass eines der beiden Sensorelemente der Zusatzerfassungseinheit an das erste Energieversorgungsnetz und ein anderes der beiden Sensorelemente der Zusatzerfassungseinheit an das zweite Energieversorgungsnetz angebunden ist. Vorzugsweise ist die Zusatzerfassungseinheit auf der ersten oder zweiten Seite der Leiterplatte angeordnet. Dabei können die beiden Sensorelemente der Zusatzerfassungseinheit durch einen separaten elektronischen Baustein, insbesondere in Form eines Chips und/oder Halbleiter-Dies, gebildet sein und/oder ein gemeinsames Gehäuse aufweisen. Es ist jedoch ebenso denkbar, dass die Zusatzerfassungseinheit auf die erste und zweite Seite aufgeteilt ist, sodass eines der beiden Sensorelemente der Zusatzerfassungseinheit auf der ersten Seite und das andere Sensorelement der Zusatzerfassungseinheit auf der zweiten Seite angeordnet ist. Durch die Zusatzerfassungseinheit, insbesondere in Verbindung mit der Kreuzverschaltung, kann eine weitere Verbesserung der Verfügbarkeit und der Zuverlässigkeit bei der Erkennung der Lenkposition erzielt werden. Insbesondere, wenn die Sensorelemente der Zusatzerfassungseinheit als TMR-Sensoren ausgebildet sind und auf der ersten Seite der Leiterplatte angeordnet sind, kann durch den im Vergleich zur zweiten Seite geringeren Abstand zum Rotationselement ein höheres Magnetfeld erzeugt werden. Dadurch kann eine besonders zuverlässige Messung erzielt werden.

Gemäß einem weiteren Aspekt der Erfindung ist ein Fahrzeug vorgesehen. Das Fahrzeug weist ein erfindungsgemäßes Lenksystem auf.

Somit bringt ein erfindungsgemäßes Fahrzeug die gleichen Vorteile mit sich, wie sie bereits ausführlich mit Bezug auf ein erfindungsgemäßes Lenksystem beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: ein Fahrzeug mit einem erfindungsgemäßen Lenksystem,
- Figur 2 bis 4: Elektronikeinheiten des Lenksystems in unterschiedlichen Ausführungsformen, und
- Figur 5: ein Energieversorgungssystem des Lenksystems.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

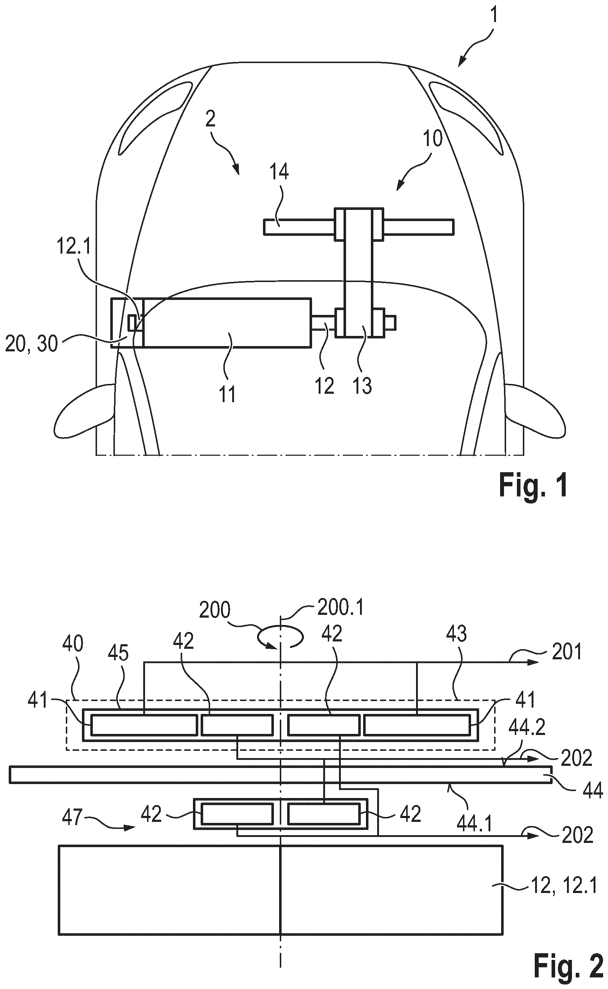

Figur 1 zeigt ein erfindungsgemäßes Fahrzeug 1 mit einem erfindungsgemäßen Lenksystem 2 für eine Lenkung des Fahrzeuges 1 in einem ersten Ausführungsbeispiel. Das Lenksystem 2 weist eine Lenkeinheit 10 zum Beeinflussen einer Lenkrichtung des Fahrzeuges 1 und eine Antriebseinheit 11 zum Antreiben der Lenkeinheit 10 auf. Dazu umfasst die Antriebseinheit 11 ferner ein Rotationselement 12 zum Ausführen einer Rotationsbewegung 200 zum Beeinflussen der Lenkrichtung. Das Rotationselement 12 ist insbesondere als Antriebswelle ausgebildet, die mit einem Riementrieb 13 wirkt, um eine Zahnstange 14 der Lenkeinheit 10 zu bewegen.

Weiterhin umfasst das Lenksystem 2 eine Kontrolleinheit 30 zum Erkennen einer Lenkposition, z. B. in Form einer Position der Zahnstange 14, der Lenkeinheit 10 in Abhängigkeit von einem ersten Rotationsparameter 201 des Rotationselementes 12 zum Erkennen einer Umdrehungszahl des Rotationselementes 12 und einem zweiten Rotationsparameter 202 zum Erkennen eines Rotationswinkels des Rotationselementes 12 innerhalb einer Umdrehung und/oder eines Umdrehungsabschnittes. Dazu kann vorgesehen sein, dass die Kontrolleinheit 30 die Lenkposition anhand einer Kombination des ersten und zweiten Rotationsparameters 201, 202 ermittelt, d. h., insbesondere berechnet. Die Kontrolleinheit 30 ist ferner in eine Elektronikeinheit 20 des Lenksystems 2 zum Erfassen des ersten und zweiten Rotationsparameters 201, 202 integriert. Dabei wird die Elektronikeinheit 20 in einem aktiven Zustand zum Erfassen des ersten und zweiten Rotationsparameters 201, 202 mit Energie versorgt. Ferner kann ein deaktivierter Zustand der Elektronikeinheit 20 auftreten, in dem die Energieversorgung unterbrochen ist. Die Energieversorgung kann insbesondere eine Spannungsversorgung sein, sodass die Elektronikeinheit 20 im deaktivierten Zustand spannungslos ist. Der deaktivierte Zustand kann durch einen Fehlerfall oder bewusst, z. B. für eine Wartung des Fahrzeuges 1, erzeugt werden.

Wie in den Figuren 2 bis 4 in unterschiedlichen Ausführungsformen der Elektronikeinheit 20 gezeigt, weist die Elektronikeinheit 20 eine erste Erfassungseinheit 40 mit einem Erfassungsmittel 41 zum Erfassen des ersten Rotationsparameters 201 und einem Sensorelement 42 zur Erfassung des zweiten Rotationsparameters 202 auf. Die Erfassung des ersten und zweiten Rotationsparameters 201, 202 erfolgt dabei im aktiven Zustand der Elektronikeinheit 20 elektrisch, um den ersten und zweiten Rotationsparameter 201, 202 der Kontrolleinheit 30 zur Verfügung zu stellen.

Um die Rotationsbewegung 200 des Rotationselementes 12 im deaktivierten Zustand zu erkennen, ist das Erfassungsmittel 41 im deaktivierten Zustand, und vorzugsweise auch im aktivierten Zustand, der Elektronikeinheit 20 durch eine elektromagnetische Wechselwirkung mit dem Rotationselement 12 in Abhängigkeit von dem ersten Rotationsparameter 201 der Rotationsbewegung 200 des Rotationselementes 12 elektromagnetisch veränderbar, sodass der erste Rotationsparameter 201 für das Erkennen der Lenkposition im aktiven Zustand der Elektronikeinheit 20 anhand der elektromagnetischen Veränderung des Erfassungsmittels 41 erfassbar ist. Für die elektromagnetische Wechselwirkung mit dem Erfassungsmittel 41 umfasst das Rotationselement 12 ein Magnetelement 12.1, welches vorzugsweise an einem Ende des Rotationselementes 12 angeordnet ist. Durch die magnetische Veränderung wird der erste Rotationsparameter 201 der Rotationsbewegung 200 im deaktivierten und im aktivierten Zustand gespeichert. Die Elektronikeinheit 20 ist dabei dazu ausgebildet, die elektromagnetische Veränderung des Erfassungsmittels 41 anhand einer Widerstandsmessung des Erfassungsmittels 41 insbesondere nach Wiederherstellung des aktiven Zustandes zu messen.

Vorzugsweise ist das Erfassungsmittel 41 als GMR-Sensor ausgebildet und das Sensorelement 42 als TMR-Sensor, AMR-Sensor und/oder Hall-Sensor. Dadurch kann sich die Lenkposition vorteilhaft aus der Kombination des ersten und zweiten Rotationsparameters 201, 202 berechnen lassen.

Für eine hohe Verfügbarkeit der Erkennung der Lenkposition, umfasst die Elektronikeinheit 20 ferner eine zweite Erfassungseinheit 43, die redundant zur ersten Erfassungseinheit 40 ausgebildet ist. Dazu weist die zweite Erfassungseinheit 43 ebenfalls ein Erfassungsmittel 41, das im deaktivierten Zustand der Elektronikeinheit 20 durch eine elektromagnetische Wechselwirkung mit dem Rotationselement 12 in Abhängigkeit von dem ersten Rotationsparameter 201 elektromagnetisch veränderbar ist, und ein Sensorelement 42 zur Erfassung des zweiten Rotationsparameters 202 auf. Für eine vorteilhafte Anordnung und Montage weist die Elektronikeinheit 20 eine Leiterplatte 44 mit einer ersten Seite 44.1, die dem Rotationselement 12, insbesondere einer Stirnfläche des Rotationselementes 12, zugewandt ist, und einer zweiten Seite 44.2, die dem Rotationselement 12 abgewandt ist, auf. Die Leiterplatte 44 ist vorzugsweise senkrecht zu einer Drehachse 200.1 der Rotationsbewegung 200 des Rotationselementes 12, insbesondere beabstandet zu einer Stirnfläche des Rotationselementes 12, angeordnet.

Weiterhin weist die Elektronikeinheit 20 eine Zusatzerfassungseinheit 47 auf, die zwei Sensorelemente 42 umfasst. Die Sensorelemente 42 der Zusatzerfassungseinheit 47 können baugleich oder verschieden zu den Sensorelementen 42 der ersten und zweiten Erfassungseinheit 40, 43 sein. Durch die Zusatzerfassungseinheit 47 kann eine weitere Steigerung der Verfügbarkeit beim Erkennen der Lenkposition erzielt werden.

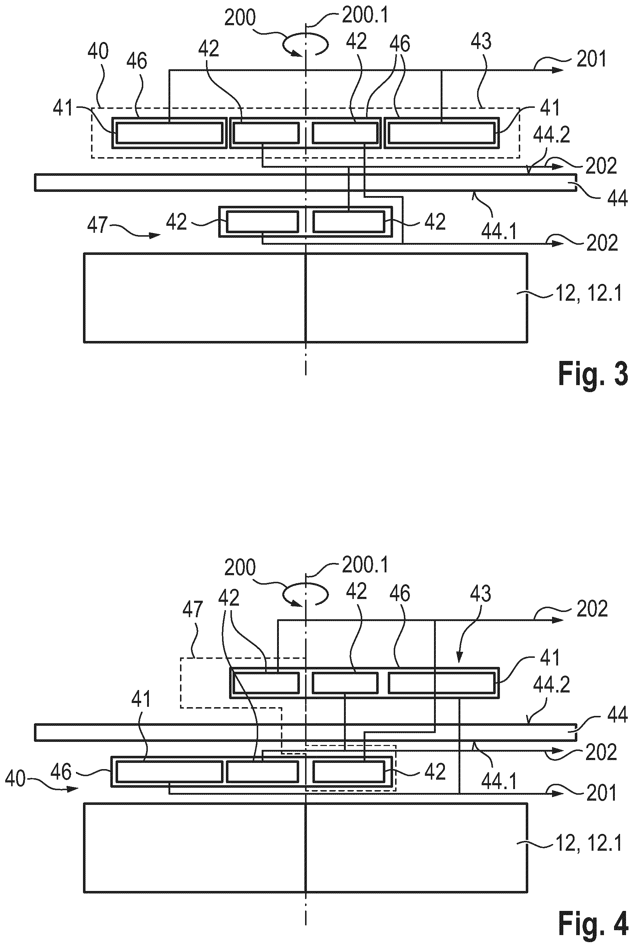

Wie in Figur 2 gezeigt, können die erste und zweite Erfassungseinheit 40, 43 in Bezug auf die Drehachse 200.1 des Rotationselementes 12 vorteilhafterweise symmetrisch zueinander auf der zweiten Seite 44.2 der Leiterplatte 44 angeordnet sein. Dadurch können die erste und zweite Erfassungseinheit 40, 43 durch die Leiterplatte 44 und/oder einen Abstand zum Magnetelement 12.1 geschützt sein. Dabei können die erste und zweite Erfassungseinheit 40, 43, wie in Figur 2 gezeigt, eine gemeinsame Baueinheit 45 oder, wie in Figur 3 gezeigt, auf mehrere Baueinheiten 46 aufgeteilt sein. Weiterhin ist die Zusatzerfassungseinheit 47 vorzugsweise auf der ersten Seite 44.1 der Leiterplatte 44 angeordnet, wie in den Figuren 2 und 3 dargestellt, sodass die Zusatzerfassungseinheit 47 eine größere Feldstärke des Magnetfeldes des Magnetelementes 12.1 erfährt.

Es ist jedoch ebenso denkbar, dass die erste Erfassungseinheit 40 auf der zweiten Seite 44.2 der Leiterplatte 44 und die zweite Erfassungseinheit 43 auf der ersten Seite 44.1 der Leiterplatte 44, wie in Figur 4 gezeigt, oder umgekehrt angeordnet sind. Dabei können auch die Sensoreinheiten der Zusatzerfassungseinheit 47 auf die erste und zweite Seite 44.1, 44.2 aufgeteilt sein. Dadurch können unterschiedliche Magnetfeldstärken erfassbar sein, um einen Fehler der Elektronikeinheit 20 zu detektieren und/oder für einen Ausfall der gesamten ersten oder zweiten Seite 44.1, 44.2 der Leiterplatte 44 eine Redundanz zu ermöglichen.

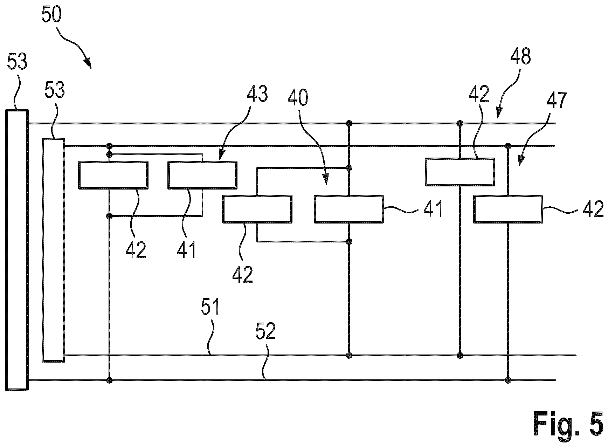

Wie in Figur 5 gezeigt, weist die Elektronikeinheit 20 ferner ein Energieversorgungssystem 50 mit zumindest einem ersten Energieversorgungsnetz 51 zum Versorgen der ersten Erfassungseinheit 40 und einem zweiten Energieversorgungsnetz 52 zum Versorgen der zweiten Erfassungseinheit 43 auf. Zur Herstellung der Redundanz sind das erste und zweite Energieversorgungsnetz 51, 52, für eine unabhängige Energieversorgung voneinander, mit jeweils einer Energiequelle 53 des Fahrzeuges 1 verbindbar. Darüber hinaus weisen die Sensorelemente 42 der Zusatzerfassungseinheit 47 zu der ersten und zweiten Erfassungseinheit 40, 43 im Energieversorgungssystem 50 eine Kreuzverschaltung 48 auf, um diese ebenfalls redundant betreiben zu können. Bei der Kreuzverschaltung 48 sind die Sensorelemente 32 der Zusatzerfassungseinheit 47 jeweils mit einem unterschiedlichen Energieversorgungsnetz 51, 52 verbunden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, insbesondere im Rahmen des durch die Patentansprüche definierten Schutzumfangs frei miteinander kombiniert werden, ohne den Rahmen der vorliegenden Erfindung zu verlassen.

### Bezugszeichenliste

- 1: Fahrzeug
- 2: Lenksystem

- 10: Lenkeinheit
- 11: Antriebseinheit
- 12: Rotationselement
- 12.1: Magnetelement
- 13: Riementrieb
- 14: Zahnstange

- 20: Elektronikeinheit

- 30: Kontrolleinheit

- 40: erste Erfassungseinheit
- 41: Erfassungsmittel
- 42: Sensorelement
- 43: zweite Erfassungseinheit
- 44: Leiterplatte
- 44.1: erste Seite
- 44.2: zweite Seite
- 45: gemeinsame Baueinheit
- 46: separate Baueinheit
- 47: Zusatzerfassungseinheit
- 48: Kreuzverschaltung

- 50: Energieversorgungssystem
- 51: erstes Energieversorgungsnetz
- 52: zweites Energieversorgungsnetz
- 53: Energiequelle

- 200: Rotationsbewegung
- 200.1: Drehachse
- 201: erster Rotationsparameter
- 202: zweiter Rotationsparameter

## Patentansprüche

1. Lenksystem (2) für eine Lenkung eines Fahrzeuges (1), aufweisend eine Lenkeinheit (10) zum Beeinflussen einer Lenkrichtung des Fahrzeuges (1), eine Antriebseinheit (11) zum Antreiben der Lenkeinheit (10) mit einem Rotationselement (12) zum Ausführen einer Rotationsbewegung (200) zum Beeinflussen der Lenkrichtung,
eine Elektronikeinheit (20), die in einen aktiven Zustand, in welchem die Elektronikeinheit (20) zum Erfassen eines ersten Rotationsparameters (201) zum Erkennen einer Umdrehungszahl des Rotationselementes (12) mit Energie versorgt wird, und in einen deaktivierten Zustand, in welchem die Energieversorgung der Elektronikeinheit (20) unterbrochen ist, bringbar ist, und
eine Kontrolleinheit (30) zum Erkennen einer Lenkposition der Lenkeinheit (10) in Abhängigkeit von dem ersten Rotationsparameter (201),
**dadurch gekennzeichnet,**
**dass** die Elektronikeinheit (20) eine erste Erfassungseinheit (40) mit einem Erfassungsmittel (41) aufweist, wobei das Erfassungsmittel (41) im deaktivierten Zustand der Elektronikeinheit (20) durch eine elektromagnetische Wechselwirkung mit dem Rotationselement (12) in Abhängigkeit von dem ersten Rotationsparameter (201) der Rotationsbewegung (200) des Rotationselementes (12) elektromagnetisch veränderbar ist, sodass der erste Rotationsparameter (201) für das Erkennen der Lenkposition im aktiven Zustand der Elektronikeinheit (20) anhand der elektromagnetischen Veränderung des Erfassungsmittels (41) erfassbar ist.

2. Lenksystem (2) nach Anspruch 1,
**dadurch gekennzeichnet,**
**dass** die erste Erfassungseinheit (40) zumindest ein Sensorelement (42) zur Erfassung eines zweiten Rotationsparameters (202) der Rotationsbewegung (200) im aktiven Zustand der Elektronikeinheit (20) aufweist, wobei die Kontrolleinheit (30) dazu ausgebildet ist, die Lenkposition anhand einer Kombination des ersten und zweiten Rotationsparameters (201, 202) zu ermitteln.

3. Lenksystem (2) nach Anspruch 1 oder 2,
**dadurch gekennzeichnet,**
**dass** die Elektronikeinheit (20) dazu ausgebildet ist, die elektromagnetische Veränderung des Erfassungsmittels (41) anhand einer Widerstandsmessung des Erfassungsmittels (41) zu messen.

4. Lenksystem (2) nach einem der vorhergehenden Ansprüche,
**dadurch gekennzeichnet,**
**dass** die Elektronikeinheit (20) eine zweite Erfassungseinheit (43) mit einem Erfassungsmittel (41), das im deaktivierten Zustand der Elektronikeinheit (20) durch eine elektromagnetische Wechselwirkung mit dem Rotationselement (12) in Abhängigkeit von dem ersten Rotationsparameter (201) elektromagnetisch veränderbar ist, und/oder einem Sensorelement (42) zur Erfassung des zweiten Rotationsparameters (202) aufweist, wobei die zweite Erfassungseinheit (43) redundant zur ersten Erfassungseinheit (40) ausgebildet ist.

5. Lenksystem (2) nach einem der vorhergehenden Ansprüche,
**dadurch gekennzeichnet,**
**dass** die Elektronikeinheit (20) ein Energieversorgungssystem (50) mit zumindest einem ersten Energieversorgungsnetz (51) zum Versorgen der ersten Erfassungseinheit (40) und einem zweiten Energieversorgungsnetz (52) zum Versorgen der zweiten Erfassungseinheit (43) aufweist, wobei das erste und zweite Energieversorgungsnetz (51, 52), für eine unabhängige Energieversorgung voneinander, mit jeweils einer Energiequelle (53) des Fahrzeuges (1) verbindbar sind.

6. Lenksystem (2) nach einem der vorhergehenden Ansprüche,
**dadurch gekennzeichnet,**
**dass** die erste und zweite Erfassungseinheit (40, 43) in Bezug auf eine Drehachse (200.1) des Rotationselementes (12) symmetrisch zueinander angeordnet sind.

7. Lenksystem (2) nach einem der vorhergehenden Ansprüche,
**dadurch gekennzeichnet,**
**dass** die Elektronikeinheit (20) eine Leiterplatte (44) mit einer ersten Seite (44.1), die dem Rotationselement (12) zugewandt ist, und einer zweiten Seite (44.2), die dem Rotationselement abgewandt ist, aufweist, wobei die erste Erfassungseinheit (40) und/oder die zweite Erfassungseinheit (43) auf der zweiten Seite (44.2) der Leiterplatte (44) angeordnet ist.

8. Lenksystem (2) nach einem der vorhergehenden Ansprüche,
**dadurch gekennzeichnet,**
**dass** die erste und zweite Erfassungseinheit (40, 43) eine gemeinsame Baueinheit (45) bilden oder auf mehrere Baueinheiten (46) zur Anordnung auf der Leiterplatte (44) aufgeteilt sind.

9. Lenksystem (2) nach einem der vorhergehenden Ansprüche,
**dadurch gekennzeichnet,**
**dass** eine Zusatzerfassungseinheit (47) vorgesehen ist, die zwei Sensorelemente (42) umfasst, die zu der ersten und zweiten Erfassungseinheit (40, 43) im Energieversorgungssystem (50) eine Kreuzverschaltung (48) aufweisen.

10. Fahrzeug (1), aufweisend
ein Lenksystem (2) nach einem der vorhergehenden Ansprüche.
